# EUROPEAN PATENT APPLICATION

(11) **EP 3 238 582 A1**
(43) Date of publication of application: **01.11.2017**
(21) Application number: 16167159.9
(22) Date of filing: 26.04.2016
(51) Int. Cl.: A47J 31/56

(54) **A BREWING UNIT AND A BEVERAGE PRODUCING DEVICE INCLUDING SUCH BREWING UNIT**

(71) Applicant: SAGA COFFEE S.p.A., Gaggio Montano (BO) (IT)
(72) Inventor: ZONATO, Alberto, 35127 PADOVA (IT); FIN, Giuseppe, 30020 MEOLO (IT)
(74) Representative: Giannini, Manuela

(57) **Abstract**

A brewing unit (17) for preparing beverages is disclosed. The brewing unit comprises: a supporting structure (43); a brewing chamber (45); a hot water delivery duct (33, 33A), configured and arranged for delivering hot water to the brewing chamber (45); a beverage dispensing duct (39), configured and arranged for delivering a beverage from the brewing chamber (45); a driving mechanism (53) for opening and closing the brewing chamber (45); an electric heater (41) in heat exchange relationship with the brewing chamber (45); an enclosure (61), which at least partly surrounds the brewing unit (17) and defines a heat transfer volume (60) in heat exchange relationship with the brewing chamber (45). The electric heater (41) is arranged for delivering heat generated thereby into the heat transfer volume (60).

## Description

### FIELD OF THE INVENTION

The invention concerns the field of beverage producing machines and devices, such as but not limited to machines and devices for the production of coffee-based beverages. Embodiments disclosed herein specifically concern improvements to brewing units for such beverage producing devices, in particular but not exclusively intended for use in so-called vending machines.

### BACKGROUND OF THE INVENTION

Hot beverages, such as coffee, espresso, fresh-brew coffee and similar coffee-based beverages, are produced by extraction from one or more solid ingredients contained in a brewing chamber, where through hot and possibly pressurized brewing water is caused to flow.

Automatic or semi-automatic beverage producing machines are known, which use single dose of pre-packaged ingredients, in form of pods, capsules, cartridges or the like. The single dose package is introduced in the brewing chamber, which is then closed and hot water is caused to forcedly flow through the package.

Some known automatic or semi-automatic beverage producing machines use bulk ingredients, e.g. coffee beans, which are ground to produce coffee powder. This latter is loaded in the brewing chamber, which is then closed and hot water is caused to flow through the coffee powder contained in the brewing chamber.

Beverage producing machines and devices are often housed in a vending machine, which can be installed in closed or open environments, such as railroad stations, airports, industrial premises or the like. The environmental conditions can affect the operating conditions of the beverage producing device arranged in the vending machine. For instance, the ambient temperature can have an impact on the brewing temperature. The brewing temperature is an important parameter having considerable impact on the final quality and organoleptic characteristics of the beverage. Too low a brewing temperature may result in poor beverage quality.

WO-A-2012020296 discloses a beverage producing device with a brewing unit and a heating system, for controlling the temperature of the brewing chamber. The heating system provides a fan and a heater arranged separate from the brewing unit and a duct, arranged under the brewing chamber and in fluid communication with the external heater and fan, to generate a flow of hot air which directly hits the brewing chamber. The efficiency of this know system is unsatisfactory.

It would be desirable to provide a brewing unit, which at least partly alleviates, in a more efficient manner, potential negative impacts of environmental conditions on the quality of the beverage produced by a beverage producing machine.

### SUMMARY OF THE INVENTION

According to one aspect of the invention, a brewing unit for preparing beverages is provided. The beverage unit comprises a supporting structure and a brewing chamber supported by the supporting structure. The brewing unit further includes a hot water delivery duct configured and arranged for delivering hot water to the brewing chamber, and a beverage dispensing duct, configured and arranged for delivering beverage from the brewing chamber. The brewing unit further includes a driving mechanism for opening and closing the brewing chamber and an electric heater in heat exchange relationship with the brewing chamber. An enclosure is further provided, which at least partly surrounds the brewing unit and defines a heat transfer volume in heat exchange relationship with the brewing chamber. The electric heater is arranged for delivering heat generated thereby into the heat transfer volume.

The enclosure can be external to the supporting structure and at least partly surround the supporting structure.

Heat can thus circulate inside the volume delimited by the enclosure and can be used to heat the brewing chamber and/or other components of the brewing unit, such as for instance the beverage delivery duct.

The temperature inside the brewing unit can be maintained at a level sufficient to ensure a high beverage quality also after a long dwelling time, during which the brewing unit remained inoperative.

According to some embodiments, the brewing chamber comprises a first brewing chamber portion and a second brewing chamber portion, configured and arranged for taking an open position, in which the first brewing chamber portion and the second brewing chamber portion are spaced apart from one another, and a closed brewing position. The enclosure can be structured such as to at least partly surround both the first brewing chamber portion and the second brewing chamber portion, when the first brewing chamber portion and the second brewing chamber portion are in the open position. In this way, a better temperature control is obtained, over both brewing chamber portions, and thus better organoleptic properties of the brewed beverage are obtained even after a prolonged period of inactivity.

The supporting structure can comprise a first side panel and a second side panel. The brewing chamber can be arranged between the first side panel and the second side panel. Between the first side panel and the second side panel also the driving mechanism which controls opening and closing of the brewing chamber can be arranged. The side panels are structured to support the forces generated by the closure of the brewing chamber and by the pressure inside the brewing chamber, when pressurized water is fed through the brewing chamber. Typically, the brewing pressure can achieve relatively high pressure values, from 2 up to 15 bar or more. The enclosure can be configured to at least partly surround at least one of the first side panel and second side panel of the supporting structure

In particularly advantageous embodiments, the electric heater comprises a PTC resistor. As will be described in more detail later on, when a PTC is used a self-regulating system can be obtained, wherein no separate temperature sensor is required to control the operation of the brewing unit. The amount of electric current flowing through the PTC reduces when the temperature increases, such that the higher the temperature of the brewing unit, the lower the heat generated by the electric heater.

In some embodiments, the electric heater exchanges heat with the brewing chamber by conduction, i.e. by direct contact between the electric heater and the brewing chamber. In other embodiments heat is delivered by the electric heater through convection, either natural or forced. In the latter case an air fan can be used. Forced convection promoted by an air fan results in a particularly efficient heating of the brewing unit.

The electric heater can be provided with a heat sink, i.e. with a structure configured and arranged to promote heat dissipation from a heat generating component, such as a resistor, in particular a PTC resistor, and the interior of the enclosure. The heat sink can be formed by or comprised of cooling fins, such as metal cooling fins, for instance made of aluminum, copper or other materials having a high heat exchange coefficient.

Other features and advantages of the invention will be better appreciated from the following detailed description of exemplary embodiments.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a vending machine including a brewing unit according to the invention;
Fig. 2 is a schematic of a brewing unit and relevant hydraulic circuit;
Fig. 3 illustrates an axonometric view of a first embodiment of a brewing unit according to the invention;
Fig. 4 illustrates a sectional view of the brewing unit of Fig 3 according to line IV-IV in Fig.5;
Fig. 5 illustrates a sectional view according to line V-V of Fig. 4;
Fig. 6 illustrates an enlarged detail of Fig. 4;
Fig. 7 illustrates an axonometric view of a second embodiment of a brewing unit according to the invention;
Fig. 8 illustrates a sectional view of the brewing unit of Fig. 7 according to line VIII-VIII in Fig. 9;
Fig. 9 illustrates a sectional view according to line IX-IX of Fig. 8;
Fig. 10 illustrates an enlarged detail of Fig. 9;
Fig. 11 illustrates an axonometric view of a further embodiment of a brewing unit according to the invention;
Fig. 12 illustrates a sectional view according to a vertical plane of the brewing unit of Fig. 11;
Figs. 13 and 14 illustrate two perspective views of an exemplary embodiment of an enclosure to be mounted on a brewing unit;
Figs. 15 and 16 illustrate two perspective views of a brewing unit fittable with the enclosure of Figs. 13 and 14;
Fig. 17 illustrate a perspective view of an assembly comprising a brewing unit according to Figs. 15 and 16 fitted with an enclosure according to Figs. 13 and 14;
Fig. 18 illustrates a side view of the assembly of Fig. 17;
Fig. 19 illustrates a top view according to line XIX-XIX of Fig. 18;
Fig. 20 illustrates a sectional view according to line XX-XX of Fig. 19;
Fig. 21 illustrate a sectional view according to line XXI-XXI of Fig. 20;
Fig. 22 illustrates a perspective view similar to Fig. 17 of a modified embodiment;
Fig. 23 illustrate a top view of the assembly of Fig. 22;
Fig. 24 illustrates a boiler and an electro-valve arranged along the water pipe connecting the boiler to the brewing unit.

### DETAILED DESCRIPTION OF THE EMBODIMENTS

The following detailed description of exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

In the following description reference will be made to embodiments of beverage producing machines which produce coffee-based beverages, and more specifically to coffee brewing units used in vending machines. It shall however be understood that features described herein can be used with advantage in other brewing units used for producing different kinds of hot beverages.

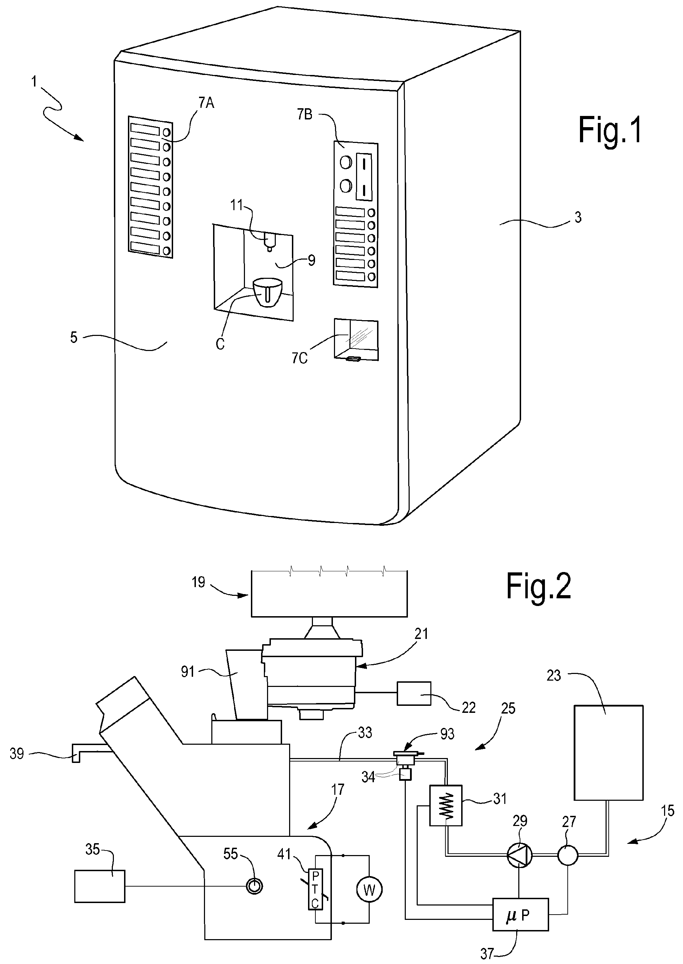

Fig. 1 illustrates a vending machine 1, which can include a coffee brewing unit as described herein after. The vending machine 1 can comprise a housing 3, wherein a coffee brewing unit and/or other beverage producing devices can be housed. The housing 3 comprises a front panel 5 with user interfaces 7A, 7B, 7C, containing beverage selection means and beverage payment means, using coins or other payment arrangements, e.g. electronic payment means.

Reference number 9 indicates a recess where a beverage dispensing nozzle 11 or a set of beverage dispensing nozzles is located. A cup C can be manually or automatically placed in the recess 9 underneath nozzle 11, to receive the beverage therein.

The vending machine 1 can include several ancillary apparatus, devices and instrumentalities, such as stirrer or spoon dispensers, sugar dispensers, cup dispensers, and the like, which are known to those skilled in the art and are not described herein.

Inside the housing 3 a coffee producing device can be arranged, which produces a coffee-based beverage that is dispensed through the dispensing nozzle 11. Fig.2 schematically illustrates an exemplary embodiment of the beverage producing device. More specifically, in the embodiments disclosed herein the beverage producing device is a coffee producing device 15. The description of the beverage producing device 15 is limited to the main components thereof, useful for understanding the invention.

The coffee producing device 15 comprises a brewing unit 17, which can receive beverage ingredients from a storage device. In the exemplary embodiment of Fig. 2 the coffee producing device 15 comprises a coffee beans reservoir 19 and a grinding unit 21. Reference number 22 schematically indicates a grinder actuator. The grinder is configured and arranged for receiving coffee beans form the coffee beans reservoir 19 and for dispensing coffee powder, obtained by grinding the coffee beans, in the brewing unit 17.

The coffee producing device 15 further comprises a water tank 23 and a water supply circuit 25, wherefrom water is delivered to the brewing unit 17. The water supply circuit can comprise a flowmeter 27, a water pump 29 and a water heater 31. Pressurized cold water from the water tank 23 is delivered by the water pump 29 to the water heater 31 to be heated therein. Hot pressurized water is then delivered through a hot water delivery duct 33 to the brewing unit 17. An electro-valve 34 can be provided along the hot water delivery duct 33. The electro-valve 34 is selectively controlled to allow delivery of pressurized hot water from the water heater 31 to the brewing unit 17, and to discharge the brewing pressure from the brewing unit at the end of a brewing cycle.

As will be described later on, the brewing unit 17 comprises a brewing chamber which can be selectively opened and closed, e.g. by means of an actuator, such as an electric motor or the like, schematically shown at 35.

Reference number 37 indicates a central control unit, which can be functionally connected to the above described components of the water supply circuit 25, to the coffee grinder actuator 22, and to the brewing unit actuator 35.

When a brewing cycle is initiated, coffee beans are dispensed from the coffee beans reservoir 19 to the grinding unit 21 and are ground therein by the grinder actuator 22. Coffee powder thus produced is loaded in the brewing chamber of the brewing unit 17. Once sufficient coffee powder has been loaded in the brewing chamber, the latter is closed and hot, pressurized water is dispensed to the brewing unit 17 via pump 29 and heater 31 from the water tank 23 through the hot water delivery duct 33. The water flows through the coffee powder contained in the brewing chamber and extracts the coffee beverage, which is dispensed through a beverage dispensing duct 39, fluidly coupled to the beverage dispensing nozzle 11 (Fig.1).

During the brewing cycle the brewing chamber and the hydraulic circuitry connected thereto is heated by the hot water from the water heater 31. When the first brewing cycle is initiated, the brewing chamber and the circuitry can be at relatively low temperature, such that the water temperature in the brewing chamber can be below an optimal value. The first cup of beverage may thus not meet the user's expectations in terms of taste and other organoleptic characteristics. Once the brewing unit 17 and relevant circuitry have warmed up, better beverage quality can be obtained.

However, if the beverage producing device is placed in a stand-by condition for a relatively long dwelling time period, the brewing unit 17 and the hydraulic circuitry connected thereto will cool down again. Cooling is all the more rapid if the ambient temperature is low, e.g. if the vending machine 1, wherein the brewing unit 17 is positioned, is arranged in an open space.

In order to slow down the cooling process, to heat-up the brewing unit prior to start a new brewing cycle, or to maintain the brewing chamber constantly at a sufficiently high temperature, the brewing unit 17 can be provided with an electric heater 41. Several embodiments of possible brewing units 17 with an electric heater 41 will be described here below.

The electric heater 41 can include an electric resistor. In particularly advantageous embodiments, the resistor can have an electric resistance, which is dependent upon the temperature, i.e. the resistor can be a so-called thermistor. In preferred embodiments, the thermistor has a positive temperature coefficient, i.e. the resistor 41 is a so-called PTC thermistor, also named PTC resistor, the ohmic value whereof increases with temperature, such that the higher the temperature of the resistor, the higher the ohmic value thereof and thus the lower the electric current flowing therethrough.

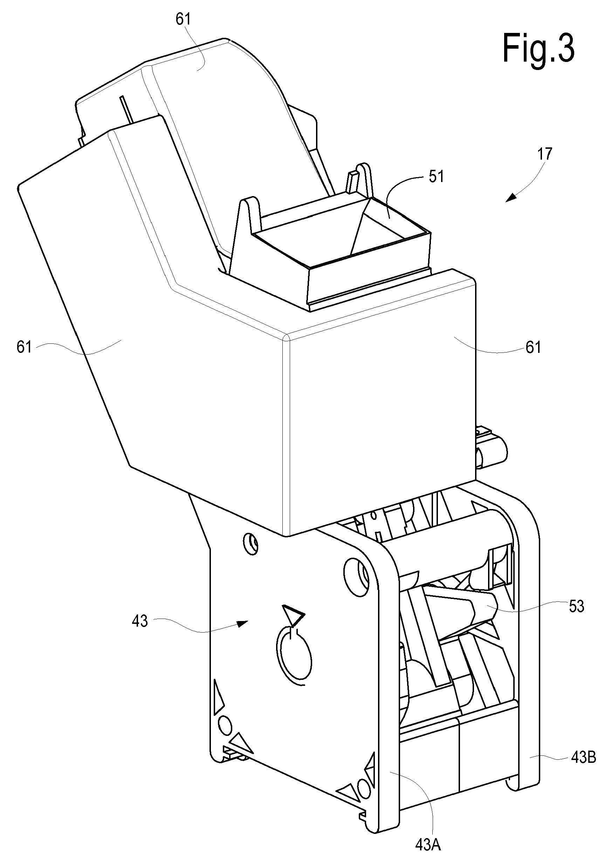

Figs. 3-6, with continuing reference to Figs. 1 and 2, illustrate a first exemplary embodiment of a brewing unit 17 with an electric heater 41 incorporated therein. The brewing unit 17 comprises a supporting structure 43, which supports a brewing chamber 45. The supporting structure 43 can be comprised of a first side panel 43A and a second side panel 43B. The brewing chamber, labeled 45 as a whole, can be arranged between the first side panel 43A and the second side panel 43B. The brewing chamber 45 can comprise a first brewing chamber portion 47 and a second brewing chamber portion 49. The first brewing chamber portion 47 forms a receptacle 47A, wherein coffee powder is loaded, while the second brewing chamber portion 49 forms a closing piston. The receptacle 47A is in fluid communication with an end portion 33A of the hot water delivery duct 33.

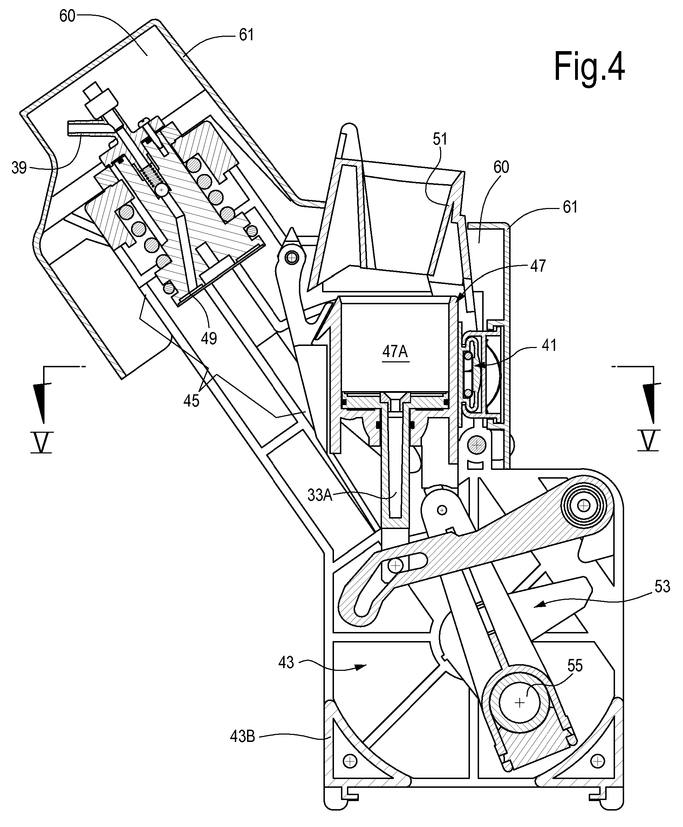

In some embodiments the first brewing chamber portion 47 can be movable from an open position, shown in Fig.4, to a closed position, not shown, wherein the first brewing chamber portion 47 and the second brewing chamber portion 49 are arranged in a substantially coaxial position, the second brewing chamber portion 49 being positioned such as to close the receptacle 47A formed by the first brewing chamber portion. The opening and closing movement can be obtained in any manner known to those skilled in the art.

In the open position the first brewing chamber portion 47 can be located under a hopper 51, through which coffee powder from the grinding unit 21 is loaded in the receptacle 47A. A driving mechanism 53, known per se, is arranged between the side panels 43A, 43B, for controlling the opening and closing movements of the brewing chamber 45. A shaft 55 drivingly couples the driving mechanism 53 to the actuator 35 (Figs. 2 and 4).

According to some embodiments, an enclosure 61 can at least partly surround the brewing unit 17 and can extend such as to at last partly enclose both brewing chamber portions 47, 49, when the brewing chamber 45 is in the open position, as shown in Fig. 4.

The enclosure 61 forms a heat transfer volume 60, which can extend around the brewing unit 17 and the brewing chamber 45 arranged therein. The electric heater 41 can be arranged in the heat transfer volume 60, in mechanical contact with a heat-receiving surface formed by the first brewing chamber portion 47.

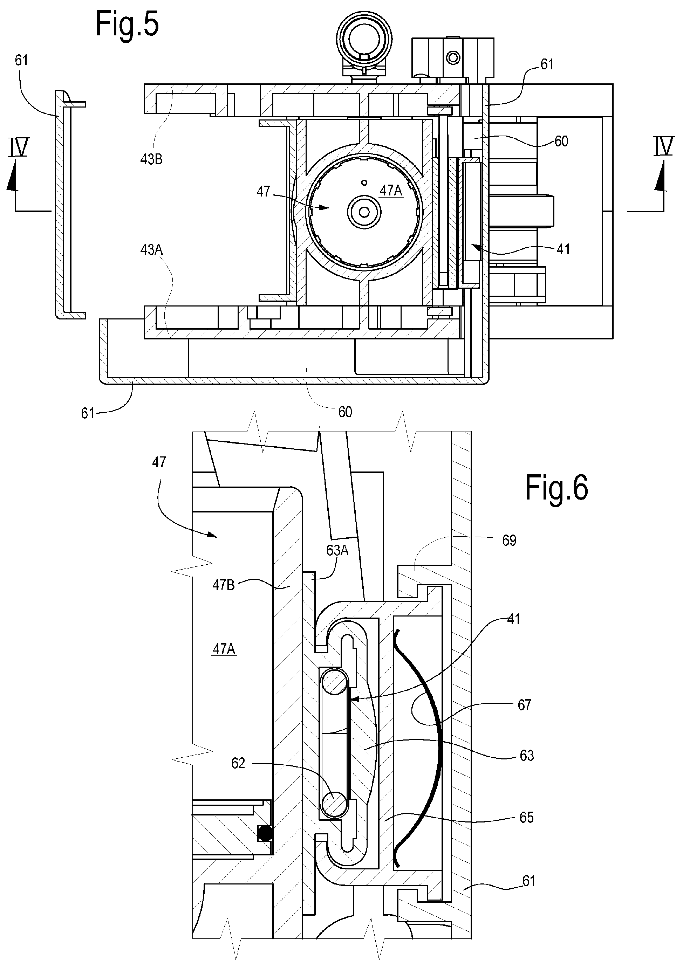

Fig. 6 illustrates an enlarged detail of the electric heater 41, showing one possible mounting arrangement thereof. In Fig.6 the electric heater 41 comprises a PTC resistor 62, which is mounted in a retention member 63. This latter can be provided with a contact member 63A. The retention member 63 can be made of a material having a high heat transmission coefficient. The retention member 63 can in turn be mounted in a holding member 65, which can be resiliently pressed by a resilient member, e.g. a spring 67, towards the first brewing chamber portion 47, when this latter is in the open position as shown in Fig. 4. The holding member 65 can be supported in a seat 69 integral with the enclosure 61.

Electric current flowing in the PTC resistor 62 generates heat by Joule effect, which is transferred by heat conduction through the retention member 63, and in particular through the contact member 63A, to a surface 47B of the first brewing chamber portion 47, which is thus maintained at a temperature higher than the ambient temperature even when the brewing unit 17 is in a standby, or inoperative dwelling condition.

The heating system thus obtained is self-adjusting, since the ohmic resistance of the PTC resistor 62 increases with temperature, such that the higher the temperature of the PTC resistor 62 and of the mechanical members in direct or indirect heat exchange relationship therewith, the lower the power consumption of the electric heater 41. A separate temperature sensor for adjusting the operation of the electric heater 41 is not required.

The electric heater 41 can be configured and arranged such that it is always electrically connected to an electric power source W, as schematically represented in Fig. 2, as long as the beverage producing device 15 is turned on. The variable ohmic resistance of the PTC resistor 62 can provide the only power control of the electric heater 41. The brewing chamber portion 47, in which the receptacle 47A is formed, is thus permanently maintained at a temperature which ensures optimal brewing conditions also when the brewing unit 17 is re-started after a long period of non-operation.

In other embodiments, the electric heater 41 can be selectively turned on or off under the control of the central control unit 37. For instance, the electric heater 41 can be turned off after a pre-set time interval, during which the beverage producing device 15 remains inoperative. The electric heater 41 can be turned on again e.g. when a user initiates a new brewing cycle. This can be particularly useful in vending machines, wherein the brewing cycle is triggered by selecting a beverage through the user's interface 7A-7C, followed by a payment step, during which the user is required to introduce money or another payment means, such as a token or an electronic payment device in the vending machine. Since these operations, as well as the subsequent phase of grinding the coffee beans, require a certain amount of time, the electric heater 41 can be activated as soon as the user first acts upon the vending machine, and sufficient time will then be available for pre-heating the brewing chamber portion 47 during the time interval till the required ground coffee powder has been loaded in the brewing chamber 45. The subsequent actual beverage extraction step will thus start after pre-heating of the brewing chamber portion 47, without the user having to wait for an extra waiting time.

In some embodiments, a dual resistor arrangement can be used, to provide an extra heating power to obtain a quicker heating when the electric heater is re-started after an inactive period.

It can also be foreseen that the beverage selection, payment and coffee beans grinding steps be slowed down to provide extra time for pre-heating the brewing chamber portion 47.

In the embodiment illustrated in Figs. 3 to 6 heat is transferred to the brewing chamber 45 mainly by conduction through contact between the wall of the first brewing chamber portion 47, which forms a heat receiving surface 47B, and the contact member 63A. The enclosure 61 surrounds at least partly the first brewing chamber portion 47 and the second brewing chamber portion 49, such that heat dissipation towards the environment and thus power consumption of the electric heater 41 is reduced.

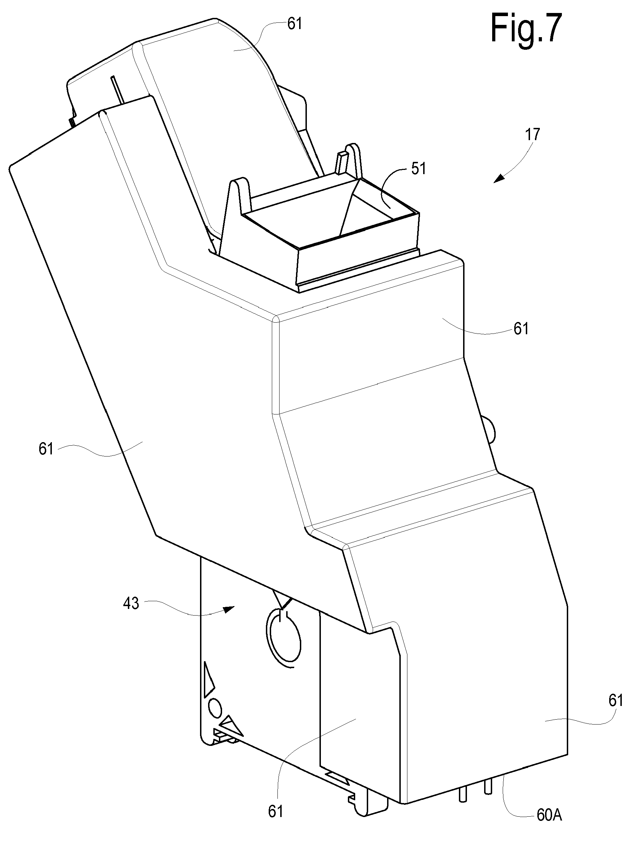

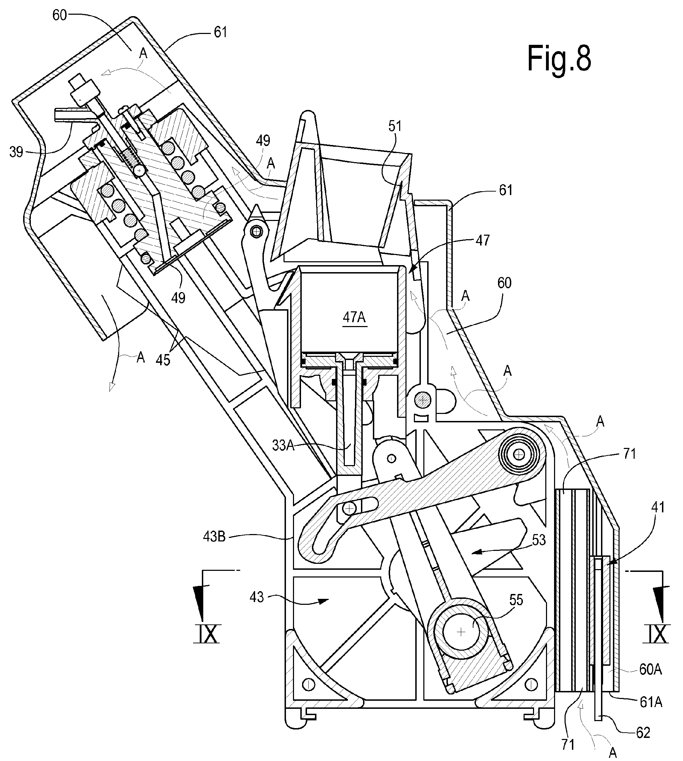

In other embodiments, heat can be transferred to the brewing chamber 45, or a part thereof, mainly by natural or forced air convection. Figs. 7-10, with continuing reference to Figs. 1 to 6, illustrate a further embodiment of a brewing unit 17 according to the invention, wherein heating of the brewing chamber 45 is obtained mainly by natural convection. The same reference numbers designate the same or similar portions, components or elements as already disclosed in connection with Figs. 1 to 6. These elements will not be described in detail again.

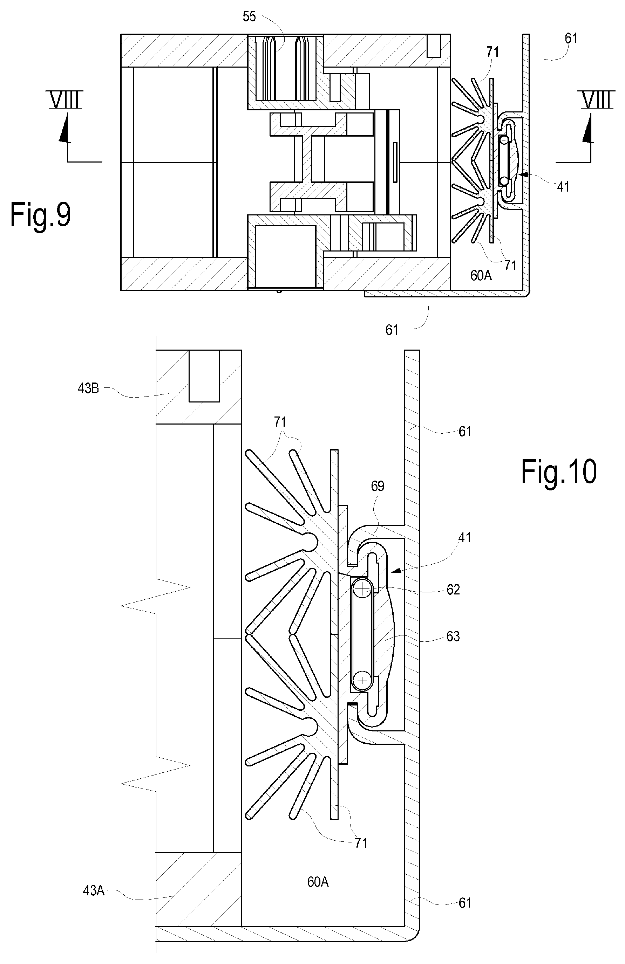

In the embodiment of Figs.7-10 the enclosure 61 extends from a bottom aperture 61A upwards to the enclosure portion which at least partly surrounds the upper brewing chamber portion 49. An electric heater 41 can be arranged in the bottom area of an air circulation duct 60A formed in the interior of the enclosure 61. In some embodiments, as best shown in the enlargement of Fig. 10, the electric heater 41 comprises a resistor, e.g. a PTC resistor 62, mounted in a retention member 63. The retention member 63 is mounted in a seat 69, which can be integral with the enclosure 61.

In some embodiments the retention member 63 can be provided with, or can be in contact relationship with cooling fins 71. The cooling fins 71 form part of a heat sink, through which heat generated by the PTC resistor 62 is transferred to air circulating through the heat sink. In preferred embodiments, the cooling fins 71 extend longitudinally in a direction substantially parallel to the air flow generated by natural convection in the air circulation duct 60A when the electric heater 41 is turned on. Heat generated by the resistor 62 is transferred to air in the air circulation duct 60A through fins 71. The orientation of the air circulation duct 60A is such that air circulation (represented by arrows A) is promoted by heat transfer from the bottom aperture 61A of enclosure 61 towards the upper part of the enclosure 61, around the first brewing chamber portion 47 and the second brewing chamber portion 49.

The electric heater 41 can be self-adjustable if a PTC resistor 62 is used, as described above. Otherwise, control can be obtained by a separate temperature sensor and using for instance resources of the central control unit 37 to adjust the operating conditions of electric heater. Using a self-adjusting PTC resistor is currently preferred, since this results in a simple though reliable and cost effective device.

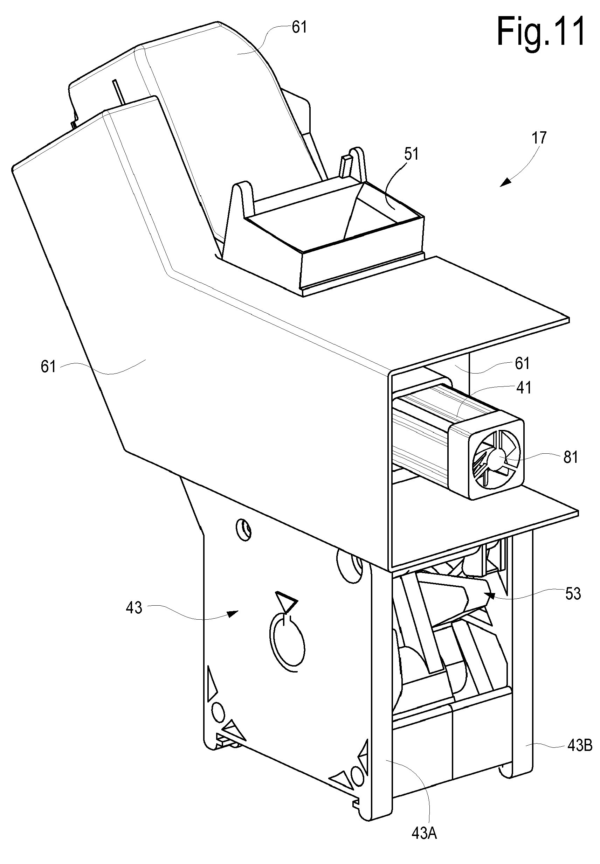

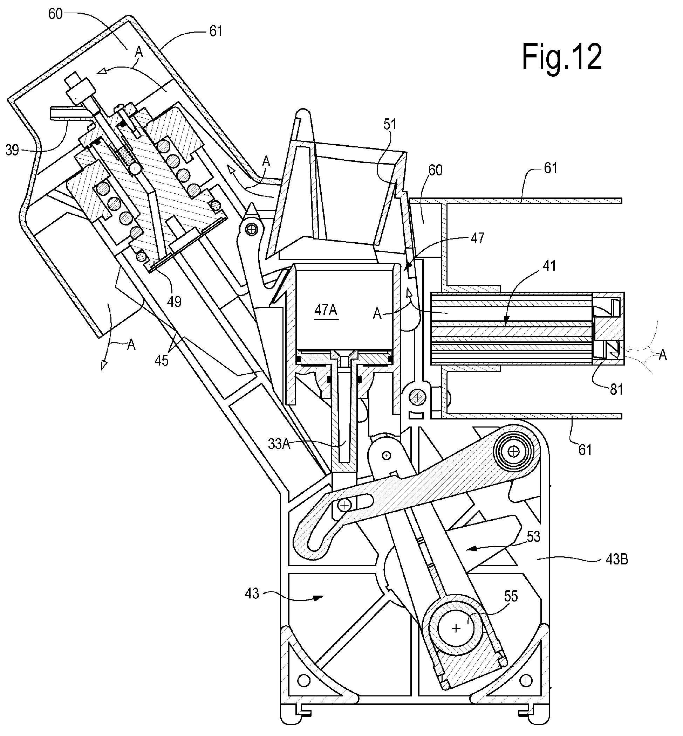

While Figs. 7 to 10, illustrate an embodiment wherein hot air is caused to circulate in the air circulation duct 60A by natural convection, forced convection can be used instead. An embodiment using forced air convection for heating purposes is illustrated in Figs. 11 and 12. The same reference numbers are used to designate the same or equivalent parts, components and elements as already described in connection with Figs. 3 to 10, which will not be described again. In the embodiment of Figs. 11 and 12 the electric heater 41 is still provided with a heat sink and is further combined with an air fan 81. This latter is arranged and configured for forcing air to circulate through the electric heater 41 and the air circulation duct 60A. Air circulating in the air circulation duct is represented by arrows A. The air is sucked by fan 81 from the exterior of the enclosure 61 and caused to enter the air circulation duct 60A by firstly passing through the electric heater 41, in heat exchange relationship therewith and more specifically with the heat sink thereof. Similarly to the previously described embodiments, in Figs 11 and 12 the electric heater 41 can be comprised of an electric resistor 62, e.g. a PTC resistor and possibly further comprised of cooling fins similar to fins 71 forming the heat sink, to improve the heat exchange between the electric resistor 62 and the air circulating through the enclosure 61.

The ohmic resistance of the PTC resistor 62 can be used as a control parameter to control the activation and de-activation of the air fan 81. In other embodiments, a separate temperature sensor can be used to that effect, or else a continuous operation of the air fan 81 can be envisaged. A self-adjusting system using a PTC resistor 62 in combination with a continuously operating air fan 81, is currently preferred.

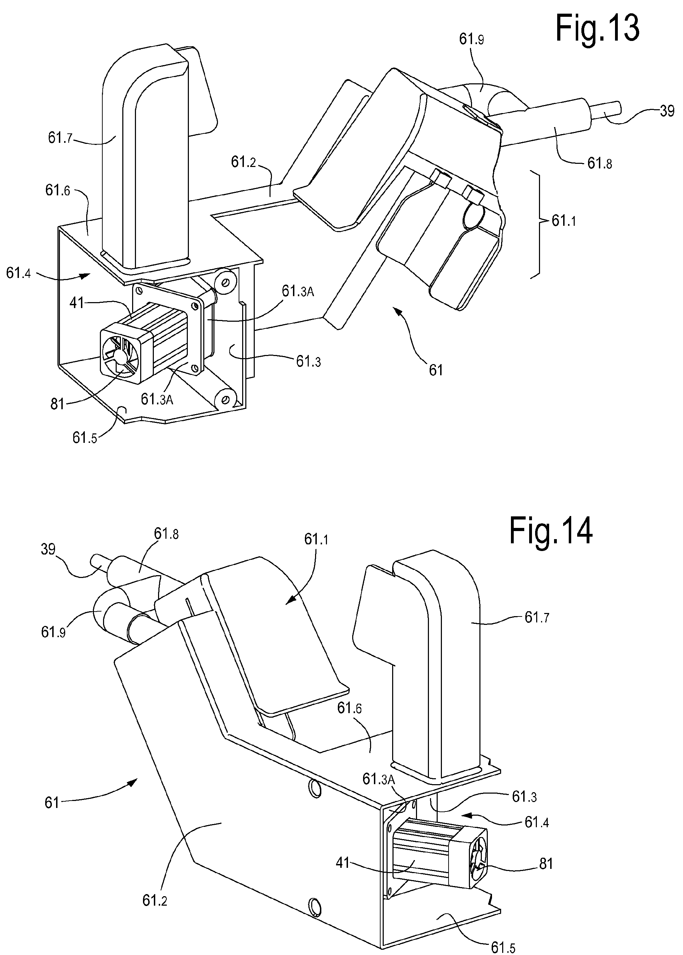

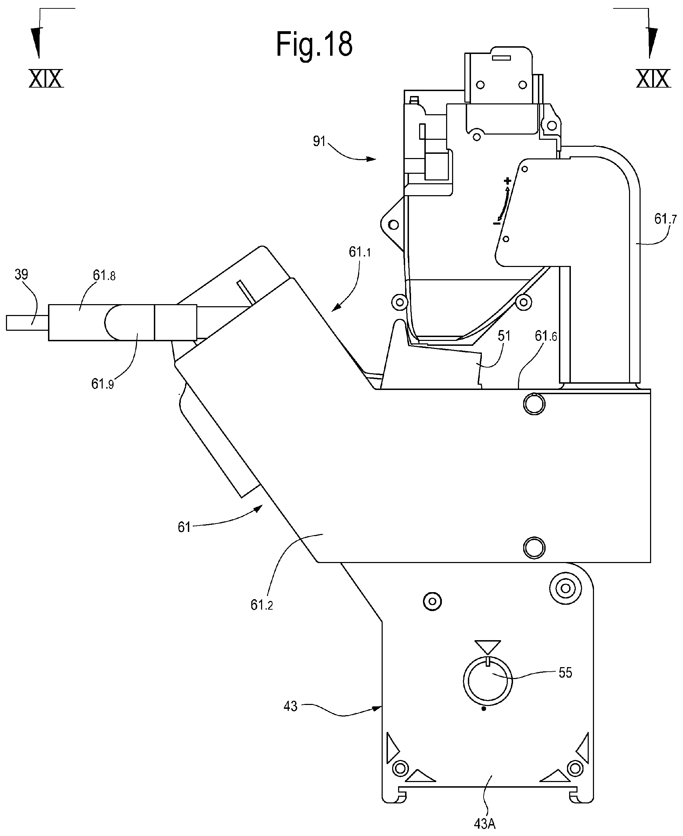

Figs. 13 to 21, with continuing reference to Figs. 1 to 12, illustrate a further exemplary embodiment. The same reference numbers used in the previous figures designate the same or equivalent parts, components or elements.

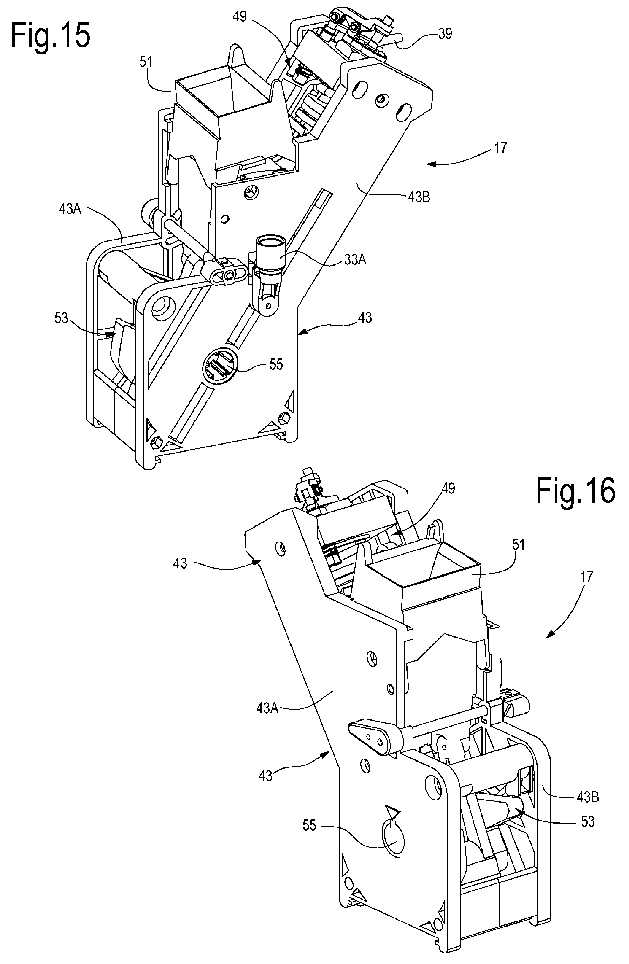

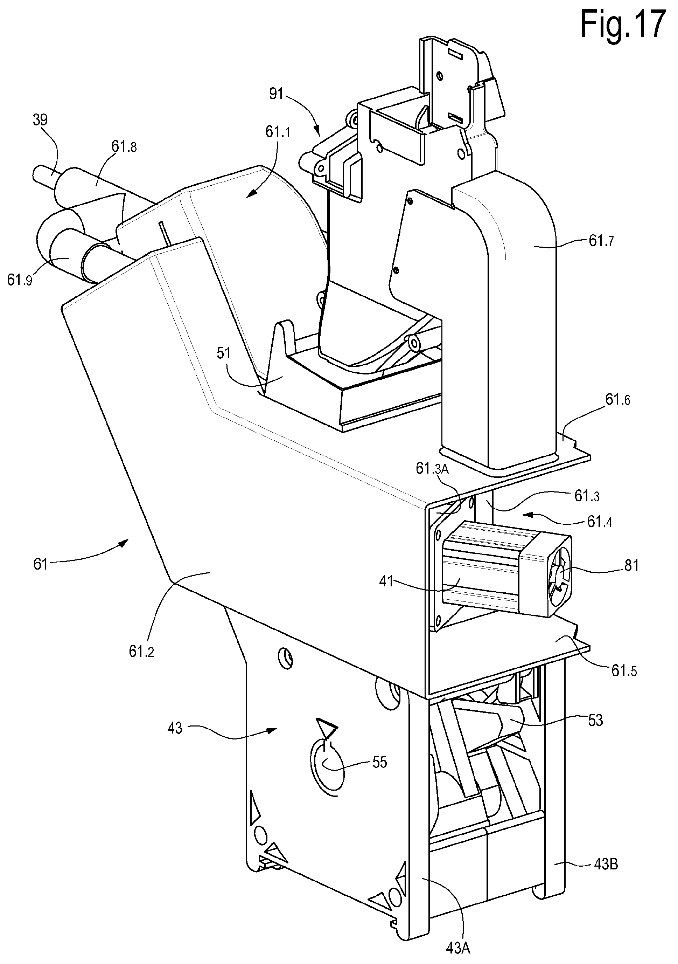

Figs. 13 and 14 illustrate two perspective views of the enclosure 61 separate from the brewing unit 17, while Figs. 15 and 16 illustrate the brewing unit 17 devoid of the enclosure 61. Figs. 17 to 21 illustrate the assembly formed by the brewing unit 17 and the enclosure 61 mounted thereon.

In Figs. 13 and 14 the main parts of the enclosure 61 are shown. Some of these parts are common also to the previously described embodiments, and will be described here below in more detail. This description applies also the previous embodiments.

More specifically, the enclosure 61 comprises a top enclosure portion 61.1, configured and arranged for at least partly surrounding the second brewing chamber portion 49. The enclosure 61 can further comprise a side wall 61.2, configured for covering one of the first side panel 43A and second side panel 43B of the brewing unit 17 and suitable positioned at a distance therefrom, thus defining at least a part of a heat transfer volume surrounding or containing the brewing unit 17 or parts thereof.

In some embodiments, the side wall 61.2 structurally connects the top enclosure portion 61.1 to a front wall 61.3 of the enclosure 61, which extends across the first side panel 43A and the second side panel 43B, and on which an electric heater 41 can be mounted, as will be described in more detail later on.

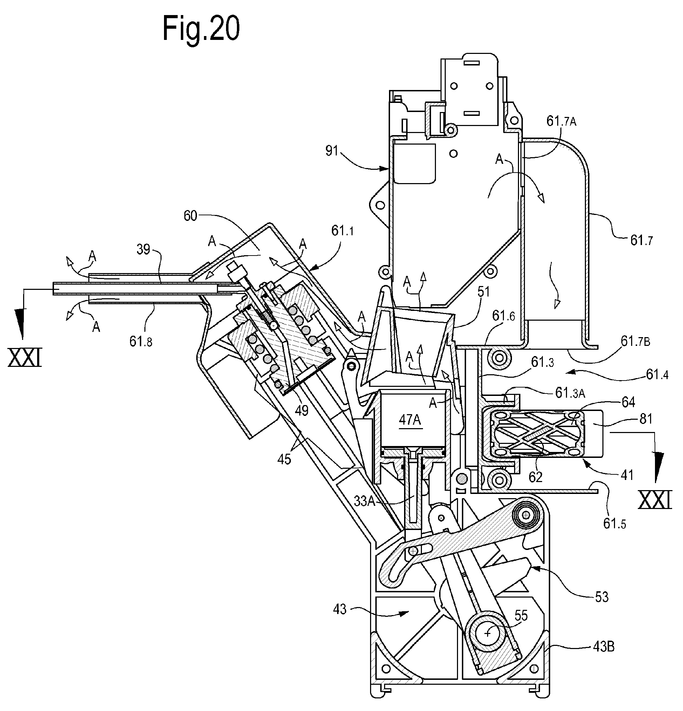

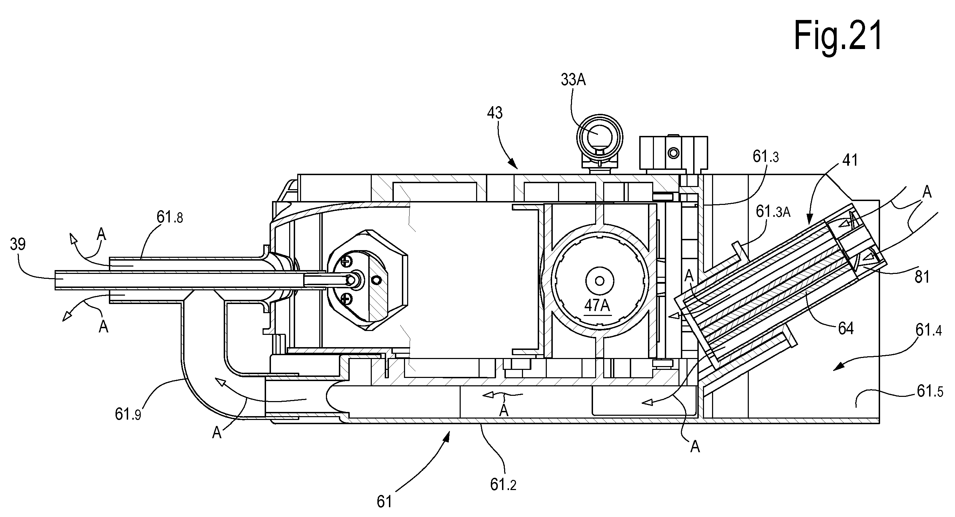

A housing 61.4 is formed by the front wall 61.3, an extension of the side wall 61.2 and by a bottom wall 61.5 and a top wall 61.6. The electric heater 41, comprised of an electric resistor 62 and a heat sink, as well as an air fan 81, configured for forcedly circulating air through the heat sink, are at least partly housed in the housing 61.4. The heater 41 and the air fan 81 can be supported on the front wall 61.3. A seat 61.3A (see Figs. 20, 21) can be provided for this purpose, wherein the electric heater 41 can be mounted, while the air fan 81 is mounted on the electric heater 41.

In some embodiments the enclosure 61 further comprises an air re-circulation duct 61.7, having an inlet 61.7A and an outlet 61.7B. This latter leads to the housing 61.4 above the air fan 81. The purpose and operation of the re-circulation duct 61.7 will be explained in more detail here after.

Furthermore, embodiments of the enclosure 61 can be provided with a first hot air escaping duct 61.8, which is arranged such as to surround the beverage delivery duct 39 of the brewing unit 17.

In some embodiments, the enclosure 61 can be provided with a second hot air escaping duct 61.9. In the embodiment illustrated in Figs. 13 to 21, the second hot air escaping duct 61.9 rejoins the first hot air escaping duct 61.8. The first and/or the second hot air escaping ducts 61.8, 61.9 are fluidly coupled to the heat transfer volume 60 surrounding or containing the brewing unit 17 or parts thereof, such that air can escape from said volume through the hot air escaping duct(s).

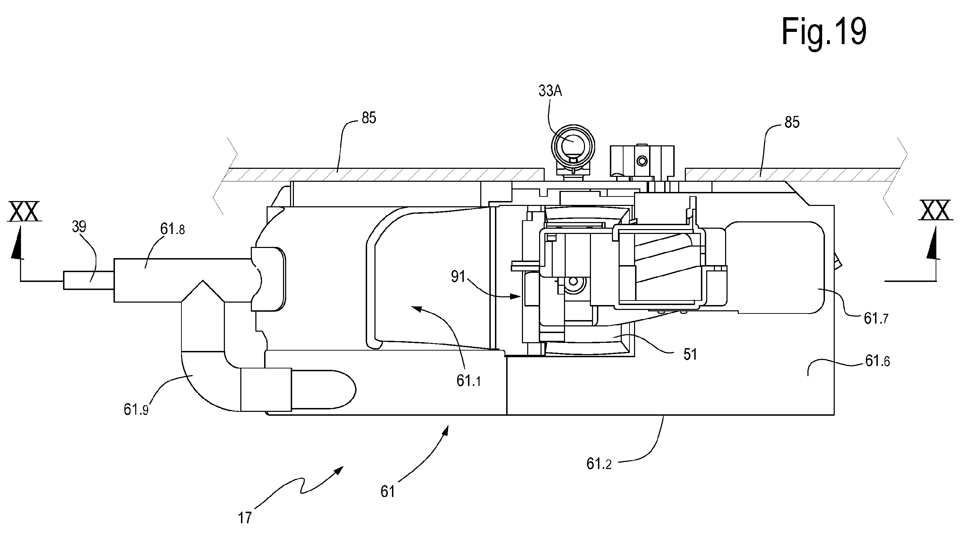

As best seen in Figs. 17 to 21 and further referring to Figs. 15 and 16, the enclosure 61 is applied on the brewing unit 17 such as to cover the side panel 43A, while the side panel 43B can be attached to a partition wall 85, shown in Fig. 19 only and omitted in the remaining figures for the sake of clarity. The partition wall 85 can support the brewing unit 17 and can separate the brewing unit 17 from an area where the water heater 31 (Fig.2) is located. A connector 33B of the hot water delivery duct 33 can project from the partition wall 85 on the side opposite the brewing unit 17, for connection to the end portion 33A of the hot water delivery duct arranged between the first side panel 43A and the second side panel 43B.

The enclosure 61 needs thus not to fully surround the brewing unit 17, since the side panel 43A thereof is maintained at a higher temperature by the water heater 31.

Similarly to the previously described embodiments also in the embodiment of Figs. 13 to 21 the electric heater 41 comprises a resistor 62, e.g. a PTC resistor and possibly a heat sink 64. The heat sink can be formed by, or comprised of cooling fins, similar to fins 71. The air fan 81 can be mounted on the heat sink 64 and is configured for generating a flow of air from the environment through the heat sink 64 and therefrom into the heat transfer volume 60 formed around the brewing unit 17 by the enclosure 61.

The air which is forcedly delivered by air fan 81 through the heat sink 64 is heated by thermal energy generated through Joule effect by the PTC resistor 62. Hot air (arrows A) further circulates in the heat transfer volume 60 and heats by forced convection at least the first brewing chamber portion 47 and possibly the second brewing chamber portion 49. In the illustrated embodiment, part of the hot air escapes the heat transfer volume 60 through the first hot air escaping duct 61.8, thus heating the beverage dispensing duct 39. A portion of the hot air flows upwards through the hopper 51 and can enter a metering device 91 arranged above the hopper 51. Hot air flowing upwardly through the metering device 91 can be recovered through the re-circulation duct 61.7. Circulation of air through the hopper 51, the metering device 91 and the re-circulation duct 61.7 can be assisted or promoted by a suction through air fan 81. This latter, in fact, can generate an under-pressure in the housing 61.4, where the re-circulation duct 61.7 leads.

As can be appreciated from Fig.13 to 21, the enclosure 61 can be attached to the brewing unit 17, which is mounted in an already existing beverage producing machine, e.g. for the purpose of upgrading the machine. Also, the enclosure 61 can be easily demounted from the brewing unit 17 for maintenance purposes, e.g. for repairing or replacing the brewing unit 17 in case of failure, as well as for cleaning purposes. Additionally, the enclosure 61 can also be easily replaced, if needed.

If a PTC resistor 62 is used as a heating element of the electric heater 41, this latter becomes self-adjusting, since the amount of electric current flowing through the PTC resistor 62 is a function of temperature. The air fan 81 can be controlled in various ways. E.g. a current sensor can be provided to detect the amount of current flowing through the PTC resistor 62 and the signal of the current sensor can be used to control the air fan 81. In other embodiments a temperature sensor can be provided. In simpler and currently preferred embodiments, the air fan 81 can be controlled independently of the actual resistance of the PTC resistor, i.e. independently of the temperature. For instance, the air fan 81 can run continuously irrespective of whether heat is generated by the PTC resistor 62 or not. When air circulation generated by the air fan 81 cools the PTC resistor 62, the ohmic resistance of this latter will become smaller, allowing more current to flow therethrough, and thus cause again a temperature increase. The entire system becomes self-adaptive with substantially no control means or sensors needed.

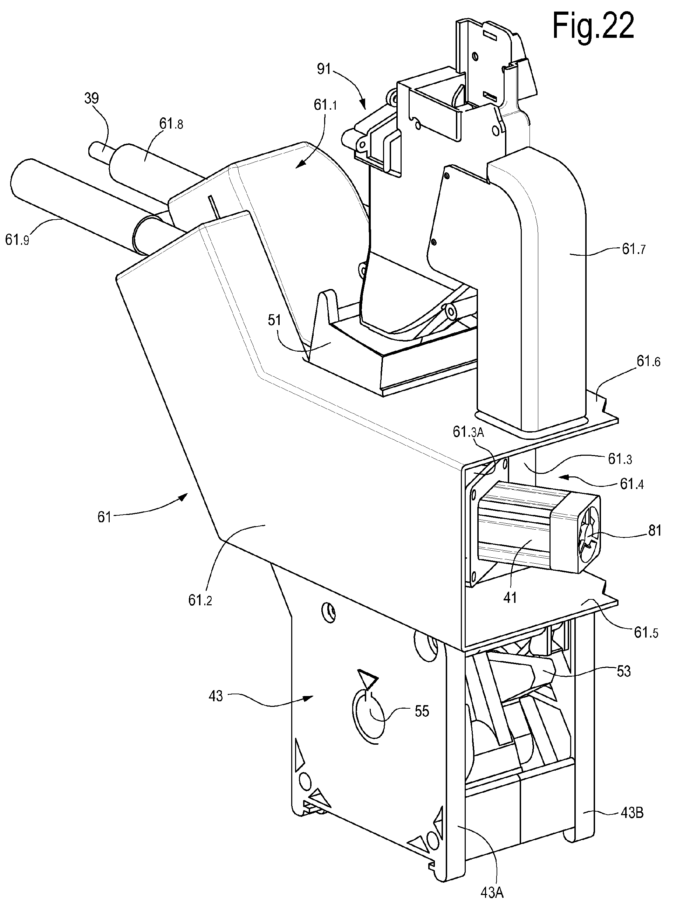

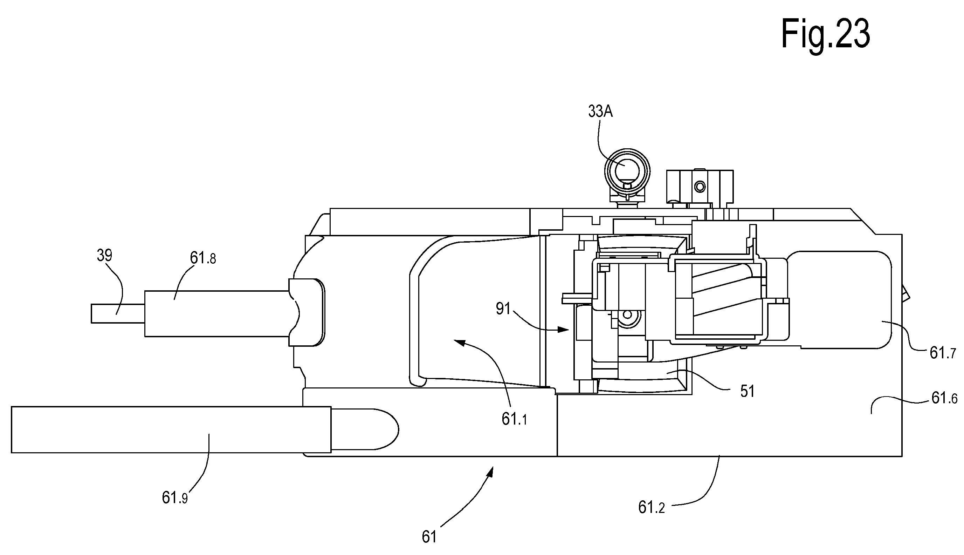

Figs. 22 and 23 illustrate in a perspective view and a top view a modified embodiment of the brewing unit 17 and enclosure 61. The embodiment of Figs. 22 and 23 differs from the embodiment of Figs. 13 to 21 in that the second hot air escaping duct 61.9 does not rejoin the first hot air escaping duct 61.8, but can rather provide hot air to a separate apparatus, device or aggregate of the beverage producing machine, in which the brewing unit 17 is arranged. For instance, hot air can be provided to one or more soluble beverage producing units, which produce beverages using hot water and soluble ingredients, as commonly used in vending machines.

According to the previously described embodiments heat is transferred to the brewing chamber using mainly one of three possible heat exchange mechanisms (conduction, natural convection and forced convection). However, in other embodiments these three mechanisms can be combined. Also, heat radiation can be used instead of, or in combination with convection and/or conduction, according to circumstances. In some embodiments a combination of two or more electric heaters can be provided.

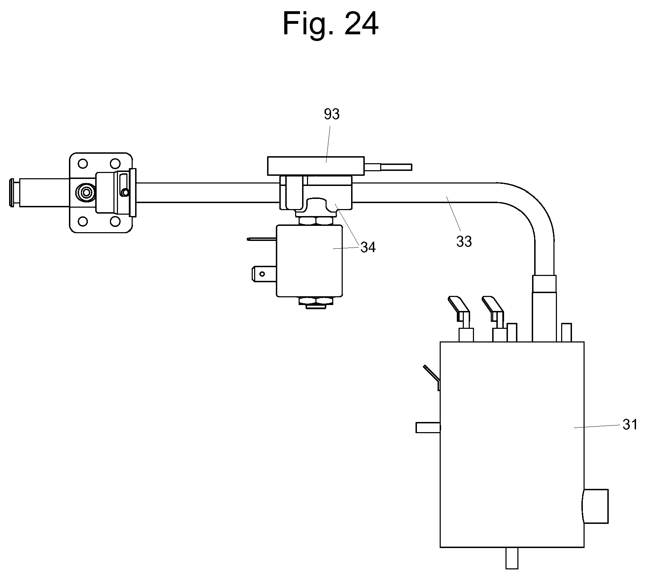

In order to further improve the performance of the coffee producing device 15, in some embodiments an electric heater, e.g. including a PTC resistor, can be combined with the electro-valve 34 (Fig.2). This arrangement ensures that water at a correct temperature is delivered from the water heater 31 to the brewing unit 17 even after a long period of inactivity of the brewing unit 17. Fig.24 illustrates an embodiment of the water heater 31 and hot water delivery duct 33, which includes an electro-valve 34 provided with an electric heater 93, e.g. including a PTC resistor. In some embodiments, the PTC resistor is selected such that the temperature of the electro-valve body, which is usually made of metal, e.g. brass, is maintained at a temperature which is slightly higher than the temperature of the water from the water heater 33. For instance, the temperature of the electro-valve 34 can be maintained at 102-103°C, while the water heater 33 dispenses water at around 100°C. In addition to keeping the electro-valve body at a suitably high temperature, the electric heater 93 also causes evaporation of the residual water from the last brewing cycle, preventing this latter to cool down while remaining in the piping.

Water delivered to the brewing unit 17 after a prolonged period of inactivity of the brewing unit 17 will thus be sufficiently high to ensure proper quality of the beverage produced.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A brewing unit (17) for preparing beverages comprising: a supporting structure (43); a brewing chamber (45); a hot water delivery duct (33, 33A), configured and arranged for delivering hot water to the brewing chamber (45); a beverage dispensing duct (39), configured and arranged for delivering a beverage from the brewing chamber (45); a driving mechanism (53) for opening and closing the brewing chamber (45); an electric heater (41) in heat exchange relationship with the brewing chamber (45); **characterized by** further comprising an enclosure (61), which at least partly surrounds the brewing unit (17) and defines a heat transfer volume (60) in heat exchange relationship with the brewing chamber (45); and wherein the electric heater (41) is arranged for delivering heat into the heat transfer volume (60).

2. The brewing unit (17) of claim 1, wherein the brewing chamber (45) comprises a first brewing chamber portion (47) and a second brewing chamber portion (49), configured and arranged for taking an open position, in which the first brewing chamber portion (47) and the second brewing chamber portion (49) are spaced apart from one another, and a closed brewing position; wherein the enclosure (61) at least partly surrounds both the first brewing chamber portion (47) and the second brewing chamber portion (49), when the first brewing chamber portion (47) and the second brewing chamber portion (49) are in the open position.

3. The brewing unit (17) of claim 1 or 2, wherein: the supporting structure (43) comprises a first side panel (43a) and a second side panel (43B); the brewing chamber (45) is arranged between the first side panel (43A) and the second side panel (43B); and the enclosure (61) at least partly surrounds at least one of said first side panel (43A) and second side panel (43B).

4. The brewing unit (17) of any one of the preceding claims, wherein the electric heater (41) comprises a PTC resistor.

5. The brewing unit (17) of any one of the preceding claims, wherein the electric heater (41) comprises a heat sink (64; 71), where through heat generated by the electric heater is dissipated.

6. The brewing unit (17) of claim 5, wherein the electric heater (41) is in thermal contact with the heat sink (71; 64), arranged and configured such that heat is transferred by convection from the electric heater (41) to the hat transfer volume (60) through the heat sink (71; 65).

7. The brewing unit (17) of any one of the preceding claims, further comprising an air fan (81), arranged for generating a flow of air in heat exchange relationship with the electric heater (41) and for circulating a flow of heated air (A) in the heat transfer volume (60).

8. The brewing unit (17) of claim 5 and 7, wherein the air fan (81) is mechanically supported on the heat sink (71; 64).

9. The brewing unit (17) of claim 5, 6 or 8, wherein the heat sink (64) is supported on a wall (61.3) of the enclosure (61) and extends through said wall (61.3), such that air circulating through the heat sink (64) flows through the wall (61.3) of the enclosure (61) and enters the heat transfer volume (60).

10. The brewing unit (17) of any one of the preceding claims, further comprising a metering device (91), configured for dispensing metered amounts of at least one beverage ingredient in the brewing chamber (45); and wherein the enclosure (61) further comprises an air re-circulation duct (61.7) in flow communication with the metering device (91).

11. The brewing unit (17) of claim 10 when depending upon at least claim 7, wherein the air re-circulation duct (61.7) comprises an outlet end (61.7B) arranged adjacent the air fan (81), such that the fan promotes circulation of air in the air re-circulation duct.

12. The brewing unit (17) of any one of the preceding claims, further comprising a first hot air escaping duct (61.8), in fluid communication with the heat transfer volume (60), extending therefrom and surrounding the beverage dispensing duct (39).

13. The brewing unit of any one of the preceding claims, further comprising a second hot air escaping duct (69.9), in fluid communication with the heat transfer volume (60), extending therefrom and configured for delivering hot air to an external user device.

14. A beverage producing device (15) comprising:
a water reservoir (23);
a water heater (31) fluidly coupled to the water reservoir (23) and receiving water therefrom;
a brewing unit (17) according to any one of the preceding claims, fluidly coupled to the water heater through a hot water delivery duct (33) and receiving hot water therefrom.

15. The beverage producing device (15) of claim 14, wherein an electro-valve (34) is arranged along the hot water delivery duct (33), and wherein a further electric heater (93) is arranged in heat exchange relationship with the electro-valve (34).

16. The beverage producing device (15) of claim 15, wherein the further electric heater (93) comprises a PTC resistor.

17. The beverage producing device (15) of any one of claims 14 to 16, wherein: a partition wall (85) is arranged between the brewing unit (17) and the water heater (31); the brewing unit (17) is mounted on the partition wall (85) on a side thereof opposite the water heater; and the brewing unit (17) is housed between the enclosure (61) and the partition wall (85).

18. A vending machine including a user interface and a beverage producing device according to any one of claims 14 to 17.
